# EUROPEAN PATENT APPLICATION

(11) **EP 4 258 497 A1**
(43) Date of publication of application: **11.10.2023**
(21) Application number: 22166972.4
(22) Date of filing: 06.04.2022
(51) Int. Cl.: H02B 13/025, H02B 7/06

(54) **ENCLOSURE FOR ELECTRICAL EQUIPMENT**

(71) Applicant: ABB SCHWEIZ AG, 5400 Baden (CH)
(72) Inventor: Nieto, Carlos, 11415 Tallinn (EE); Moppel, Madis, 74111 Maardu, Harjumaa (EE); Palgi, Ants, 75301 Jüri, Rae Vald (EE); Ionikan, Roman, 13915 Tallinn, Harju (EE); Turk, Danel, 10917 Tallinn (EE); Tammemae, Terje, 76610 Keila (EE)
(74) Representative: Kolster Oy Ab

(57) **Abstract**

The present invention relates to the field of enclosures for electrical equipment, such as electrical power equipment and/or electronic equipment, and more particularly to an enclosure for electrical equipment. The enclosure (1) for electrical equipment according to the present invention comprises a frame portion (3) and a roof portion (4) arranged on top of and covering said frame portion (3), said roof portion (4) comprising an at least one inclined roof element (5), wherein said at least one inclined roof element (5) comprises an at least one rectangular opening (10) and respectively an at least one rectangular cover (20) arranged at the centre portion of said at least one inclined roof element (5), wherein said rectangular cover (20) is fastened from its bottom side to the inclined roof element (5) with a secure fastening arrangement (21), and said rectangular cover (20) is semi-securely fastened from its top side to the inclined roof element (5) with a semi-secure fastening arrangement (13, 23, 31, 32).

## Description

### FIELD OF THE INVENTION

The present invention relates to the field of enclosures for electrical equipment, such as electrical power equipment and/or electronic equipment, and more particularly to an enclosure for electrical equipment.

### BACKGROUND OF THE INVENTION

Electrical equipment, such as electrical power equipment and/or electronic equipment may be provided with a suitable enclosure around the electrical equipment. An example of an enclosure for electrical equipment is an indoor or outdoor cabinet made of plastics and/or metal, which can be used to protect the contents from the environment and also to protect the persons in the vicinity of said electrical equipment from an electrical shock, for example.

An enclosure for electrical equipment may be an electrical substation for medium-voltage distribution networks. These electrical substations may be prefabricated electrical substations normally equipped with switchgears, which are a combination of electrical disconnect switches, fuses and circuit breakers used to protect and control power distribution networks. The purpose of a switchgear is double, in one hand is used to de-energize equipment or branches for maintenance or reconfiguration and in the other hand to clear faults downstream in the network.

Switchgears for medium-voltage distribution networks are commonly metal-enclosed and the equipment inside can be insulated by air or gas e.g., by sulfur hexafluoride. Compartmented switchgears are also the most spread worldwide due to the possibility to isolate faults within the equipment, to have different isolation mediums for different compartments, etc. There also is a possibility that an electrical substation does not include switchgear and the medium-voltage cables are directly connected or duly interconnected to the transformer bushings. In this case there is no protection for the incoming and outgoing lines of the electrical substation.

As all electrical equipment, there is a possibility of failure, which can provoke an internal arc inside the substation, which in the case of an electrical substation without protection and having direct medium-voltage cables connected to the transformer bushings develops a huge amount of electrical energy which generates overpressure and hot gases.

Enclosures for electrical equipment may also be provided with a pressure release device, such as an explosion vent or an explosion hatch, in order to relieve an excess pressure difference between the interior and the exterior of the enclosure and to avoid further damage to the enclosure and the surroundings thereof, for example. Such an excess pressure difference between the interior and the exterior of the enclosure could result from an electrical arc or a fire, for example, within the enclosure which may cause a rapid pressure to increase inside the enclosure.

From the point of view of installation prefabricated substations, different locations can be found such as installed in those locations accessible to general public. In the case of a distribution substation, to provide safety to general public, the internal arc type testing is performed. This test can be performed in accordance to different standards, considering the sub-clause 6.102 of IEC 62271-202 the one adopted by prefabricated substations manufacturers as international standard. The internal arc type testing deals with the capability of the substation to withstand an internal arc in terms of overpressure, to cause no deformations or flying objects than can hit a person and to cause no hot gases that can burn individuals.

The way a secondary substation, equipped with direct medium-voltage cables connected to the transformer bushings, handles an internal arc requires special design. The guiding of the gases plays an important role in the internal arc managing. Different manufacturers take the option of releasing the gases generated by an internal arc downwards the medium-voltage cable incoming trench to a compartment big enough to cool down the gases. Others take the option of guiding those gases to another compartment in which the gases find a bigger volume losing pressure and temperature in which a cooling device may be present. Problem with some arc management devices is that they are not economically feasible nor environmentally sustainable for low-end substations due to the high cost when compared to the cost of the whole substation.

There are problems with prior art electrical equipment enclosure arrangements as in case of a fault situation occurring in said electrical equipment, there has not been provided an economically feasible and environmentally sustainable enclosure for electrical equipment safe and for providing a safe and rapid relief for hot gases thereby to avoid further damage to the enclosure and the surroundings thereof and thus to avoid a serious danger to the individuals near said electrical equipment enclosure.

Consequently, there is clearly a need and demand for an enclosure for electrical equipment that is both economically feasible and environmentally sustainable, and that also in an electric arc discharge fault or a fire provides a safe and rapid relief for hot gases thereby to avoid further damage to the enclosure and the surroundings thereof and that provides safety of individuals.

### BRIEF DESCRIPTION OF THE INVENTION

The object of the invention is to introduce an enclosure for electrical equipment, which are economically feasible and environmentally sustainable, and which in an electric arc discharge fault or a fire provide a safe and rapid relief for hot gases and provide safety of individuals. Advantageous embodiments are furthermore presented.

It is brought forward a new an enclosure for electrical equipment enclosure for electrical equipment, comprising a frame portion and a roof portion arranged on top of and covering said frame portion, said roof portion comprising an at least one inclined roof element, wherein said at least one inclined roof element comprises an at least one rectangular opening and respectively an at least one rectangular cover arranged at the centre portion of said at least one inclined roof element, wherein said rectangular cover is fastened from its bottom side to the inclined roof element with a secure fastening arrangement, and said rectangular cover is semi-securely fastened from its top side to the inclined roof element with a semi-secure fastening arrangement. Hereby, one or more of the above-mentioned advantages and/or objectives are achieved. These advantages and/or objectives are further facilitated with the additional preferred features and/or steps described in the following.

In a preferred embodiment, said at least one inclined roof element comprises collar parts arranged in each side of said at least one rectangular opening.

In a preferred embodiment, said semi-secure fastening arrangement fastens said rectangular cover from its top side to the inclined roof element so that when an overpressure inside the substation acts on the cover, said rectangular cover, the cover is allowed to turn open in relation to said securely fastened bottom side of said rectangular cover.

In a preferred embodiment, said secure fastening arrangement comprises several secure fastening elements arranged in line forming a hinge link line so that when the pressure difference between the inside and the outside of enclosure for electrical equipment exceeds regular service conditions said hinge link line allows said rectangular cover to turn open in relation to said securely fastened bottom side of said rectangular cover.

In a preferred embodiment, said rectangular cover has thinner material of the cover along said hinge link line.

In a preferred embodiment, said an overpressure inside the substation is a pressure difference between the inside and the outside of enclosure for electrical equipment exceeding 0.5 ATM.

In a preferred embodiment, said enclosure comprises two inclined roof elements.

In a further preferred embodiment, said two inclined roof elements each comprise one rectangular opening and respectively one rectangular cover.

In a preferred embodiment, said at least one said rectangular opening comprises a mesh structure assembled in said rectangular opening.

In a preferred embodiment, said mesh structure is securely fastened to collar parts of said inclined roof element avoiding the penetration in said enclosure.

In a further preferred embodiment, said mesh structure is used as a heat exchanger arranged to cool down hot gases.

In a preferred embodiment, said rectangular cover comprises a limiting opening device arranged to limit the opening of said rectangular cover to the upright position.

In a preferred embodiment, said rectangular cover comprises a limiting opening device arranged to limit the opening of said rectangular cover to a position ± 15 degrees from the upright position.

In a further preferred embodiment, said limiting opening device is a cord, a cable, a string, a chain or a lever.

In a preferred embodiment, said an at least one rectangular opening and respectively an at least one rectangular cover arranged at the centre portion of said at least one inclined roof element.

### BRIEF DESCRIPTION OF THE DRAWINGS

In the following, the present invention will be described in more detail by way of example and with reference to the attached drawings, in which:
Figure 1 illustrates a perspective view of an embodiment of an enclosure for electrical equipment according to the present invention.
Figure 2 illustrates a perspective view of an embodiment of a rectangular opening of an inclined roof element of an enclosure for electrical equipment according to the present invention.
Figure 3 illustrates a partial perspective view of an embodiment of an inclined roof element of an enclosure for electrical equipment according to the present invention.
Figure 4 illustrates a partially cutaway perspective view of a bottom part of an embodiment of a cover of an inclined roof element of an enclosure for electrical equipment according to the present invention.
Figure 5 illustrates a partially cutaway perspective view of a top part of an embodiment of a cover of an inclined roof element of an enclosure for electrical equipment according to the present invention.
Figure 6 illustrates a side view of an embodiment of an inclined roof element of an enclosure for electrical equipment according to the present invention.
Figure 7 illustrates a partial perspective view of an embodiment of a rectangular opening with an opened cover of an inclined roof element of an enclosure for electrical equipment according to the present invention.
Figure 8 illustrates another partial perspective view of an embodiment of a rectangular opening with an opened cover of an inclined roof element of an enclosure for electrical equipment according to the present invention.

The foregoing aspects, features and advantages of the invention will be apparent from the drawings and the detailed description related thereto.

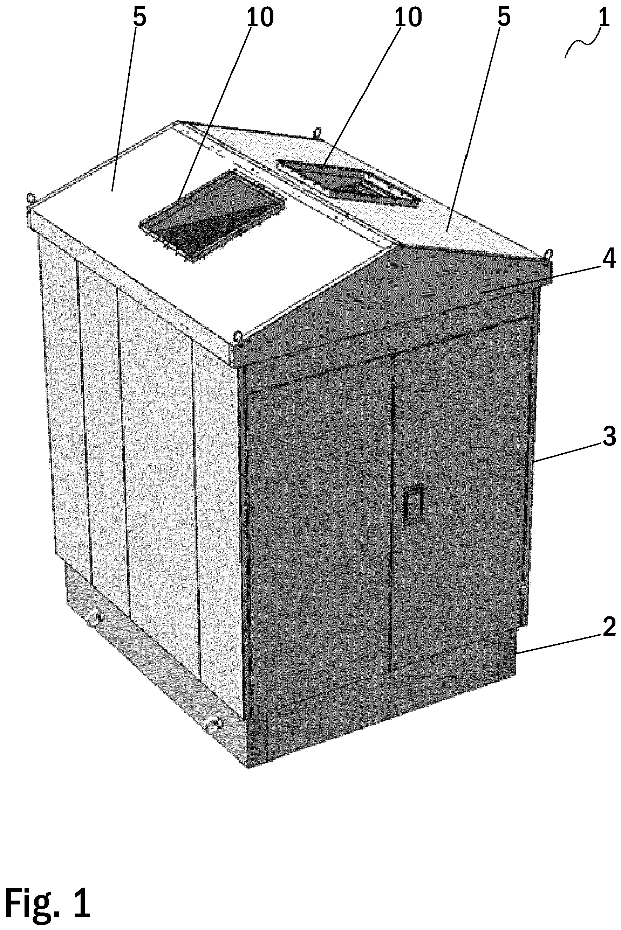

In the following, the invention will be described in greater detail by means of preferred embodiments with reference to the accompanying drawings of Figures 1 to 8.

### DETAILED DESCRIPTION

The The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or shape of the various elements, and generally their implementation, could vary from the examples shown in the figures. The application of the various embodiments described herein is not limited to any specific system, but it can be used in connection with various electrical equipment and enclosures therefor.

The enclosure for electrical equipment according to one embodiment of the present invention comprises a frame portion and a roof portion arranged on top of and covering said frame portion, said roof portion comprising an at least one inclined roof element, wherein said at least one inclined roof element comprises an at least one rectangular opening and respectively an at least one rectangular cover arranged at the centre portion of said at least one inclined roof element, wherein said rectangular cover is fastened from its bottom side to the inclined roof element with a secure fastening arrangement, and said rectangular cover is semi-securely fastened from its top side to the inclined roof element with a semi-secure fastening arrangement.

In electrical equipment, such as electrical power equipment and/or electronic equipment, said electrical equipment is typically provided with a suitable enclosure around the electrical equipment. An example of an enclosure for electrical equipment is an indoor or outdoor cabinet made of plastics and/or metal, which can be used to protect the contents from the environment and also to protect the persons in the vicinity of said electrical equipment from an electrical shock, for example. An enclosure for electrical equipment may be an electrical substation for medium-voltage distribution networks. Said enclosure for electrical equipment shields the electrical equipment and its power electronic components of the electrical equipment from dust, water, and other environmental conditions. Such enclosures such as a installation prefabricated substation, different locations can be installed in different locations this including locations accessible to general public.

In electric arc fault conditions, the power density of an enclosure for electrical equipment may cause high pressure build-up inside an enclosure for electrical equipment. Furthermore, an electric arc discharge may lead to inflammation of combustible gases such as carbon hydride gases.

In electrical equipment, the components may comprise film capacitors having a thin insulating film as a dielectric medium between the anode and the cathode. The material of the insulating film affects substantially the characteristics of the film capacitor. The insulating film may be made of glass or as in most cases of plastic. The most used plastics for an insulating film are polypropylene (PP), polyester (PET), polyphenylene sulfide (PPS), polyethylene naphthalate (PEN) ja polytetrafluoroethylene (PTFE). The film capacitors used in power electronics applications are typically polypropylene film capacitors, due to the high dielectric strength of polypropylene.

The melting point of polypropylene is about 160 °C and a breakdown of a polypropylene film typically occurs as the temperature rises above 300 °C. The film capacitor can break down due to an excessive voltage and/or due to an excessive temperature. Furthermore, the film capacitor can break down because of an unsuccessful self-healing process. When breaking down the polypropylene film produces carbon hydride gases.

Oxygen is always needed for combustible gases to catch fire. Furthermore, the combustible gases need to have a certain concentration percentage of the total air volume in order to catch fire. With carbon hydride gases, this concentration percentage of the total air volume is from 1 % to 15 %.

As an electric arc discharge occurs the air surrounding the electric arc heats up and expands explosively. The rapidly expanding air may cause pressure build-up inside the closed electrical equipment enclosure and leads to inflammation of carbon hydride gases. This in turn may cause a damage of the electrical equipment enclosure and may cause a serious danger to the persons in the vicinity of said electrical equipment enclosure.

Depending on the arc energy, given by the arc voltage, current and duration of the fault, the overpressure and hot gases are different. In a particular situation, when the electric arc is initiated in the transformer bushings the energy, or the electric arc is substantially high. When the electric arc occurs on the transformer bushings there are no means to cover those bushings due to dielectric performance. In this case, here is no possibility of releasing the gases via the ventilation openings, as the gases would be at high temperature burning indicators or general public in a real-life condition. Furthermore, gases can't be kept inside the substations due to volume limitations which would provide an enormous overpressure that the enclosure would not be able to withstand, having as outcome, burning throughs, hot flames, flying objects, etc.

Figure 1 illustrates a perspective view of an embodiment of an enclosure for electrical equipment according to the present invention. The embodiment of an enclosure 1 for electrical equipment presented in Figure 1 comprises a base portion 2, a frame portion 3 over said base portion 2 and a roof portion 4 arranged on top of and covering said frame portion 3. In an alternative embodiment of the present invention said enclosure 1 for electrical equipment comprises a frame portion 3 and a roof portion 4 arranged on top of and covering said frame portion 3. An enclosure for electrical equipment may be an electrical substation for medium-voltage distribution networks.

Said roof portion 4 according to the present invention comprises an at least one inclined roof element 5. In an alternative embodiment of the present invention said roof portion 4 comprises two or more inclined roof elements 5. In the embodiment of an enclosure 1 for electrical equipment presented in Figure 1 said roof portion 4 comprises two inclined roof elements 5.

Said at least one inclined roof element 5 comprises an at least one opening 10 arranged at the centre portion of said at least one inclined roof element 5. In the presented embodiment both of said two inclined roof elements 5 each comprise one rectangular opening 10 arranged at the centre portion of each of said two inclined roof element 5.

In the presented embodiment said rectangular opening 10 allow is arranged to allow hot gases to be evacuated. The presented solution allows the hot gases to be guided upwards, protecting that the persons in the vicinity of said enclosure for electrical equipment e.g., a substation, get burned.

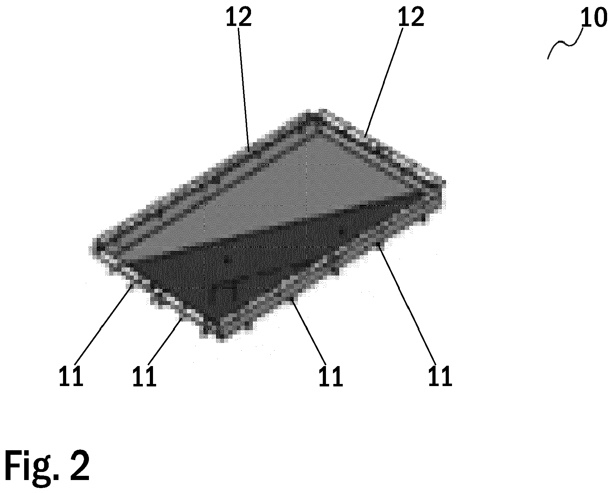

Figure 2 illustrates a perspective view of an embodiment of a rectangular opening of an inclined roof element of an enclosure for electrical equipment according to the present invention. The inclined roof element comprises collar parts 12 arranged in each side of said rectangular opening 10.

In the presented embodiment the collar parts 12 may be U-profile collar parts 12 manufactured from metal, metal alloy or composite material. In the presented embodiment U-profile collar parts 12 are fastened in each side of said rectangular opening 10 with fastening elements 11.

Said fastening elements 11 are arranged to fasten the collar parts 12 at the opening 10 to the inclined roof element 5 so that the collar parts 12 form a collar in each side of said rectangular opening 10 of the inclined roof element 5. Said fastening elements 11 may be rivets 11, screws 11, bolts 11, welded joints 11 or other fastening elements 11.

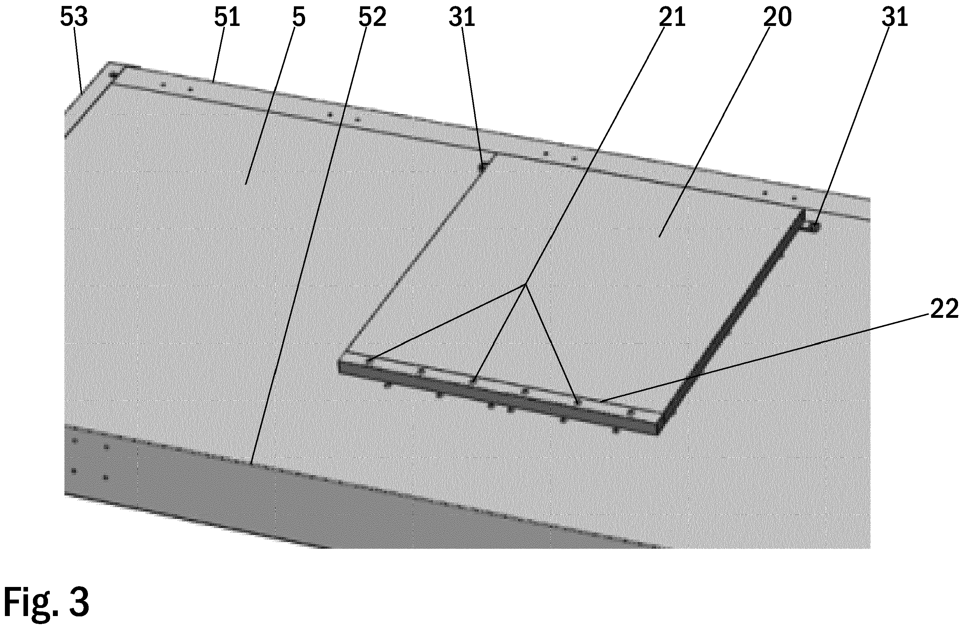

Figure 3 illustrates a partial perspective view of an embodiment of an inclined roof element of an enclosure for electrical equipment according to the present invention. An enclosure for electrical equipment may be an electrical substation for medium-voltage distribution networks. In the presented embodiment said inclined roof element 5 comprises an at least one rectangular opening and respectively an at least one rectangular cover 20, wherein said at least one opening and said at least one cover are arranged at the centre portion of said at least one inclined roof element 5. Each of said at least one rectangular cover 20 is arranged to cover said respective at least one rectangular opening.

In the presented embodiment said inclined roof element 5 comprises a top end 51, a bottom end 52 and two side ends 53. Only one side end is seen in Figure 3. In the presented embodiment said rectangular opening and said cover 20 are arranged at the centre portion of said at least one inclined roof element 5.

When referring to "the rectangular opening and the rectangular cover being arranged at the centre portion of the at least one inclined roof element", in this application it is meant to comprise any arrangement where there is left at least 20 cm distance from the bottom end 52 of said at least one inclined roof element to said rectangular opening and said cover, at least 50 cm distance from the side ends 53 of said at least one inclined roof element to said rectangular opening and said cover, and in a case when the top end 51 of said at least one inclined roof element is also one end of the whole roof portion 4 there is left at least 50 cm distance from the top end 51 of said at least one inclined roof element to said rectangular opening and said cover.

Said rectangular cover 20 is fastened from its bottom side to the inclined roof element 5 with a secure fastening arrangement 21. Said secure fastening arrangement 21 may comprise several secure fastening elements 21 to securely fasten said bottom side of said rectangular cover 20 to the inclined roof element 5, said several secure fastening elements 21 arranged in line forming a hinge link line 22 so that when the pressure difference between the inside and the outside of enclosure for electrical equipment exceeds regular service conditions said hinge link line 22 allows the cover 20 to turn open in relation to said securely fastened bottom side of said rectangular cover 20. Said secure fastening elements 21 may be rivets 21, screws 21, bolts 21, welded joints 21 or other secure fastening elements 21.

Said rectangular cover 20 may be designed such that the mere secure fastening of said rectangular cover 20 to the inclined roof element 5 by said secure fastening elements 21 naturally creates said hinge link line 22.

Said rectangular cover 20 may be designed such that the mere secure fastening of said rectangular cover 20 to the inclined roof element 5 by said secure fastening elements 21 naturally creates said hinge link line 22 when the pressure difference between the inside and the outside of enclosure for electrical equipment exceeds regular service conditions, thereby allowing the cover 20 to turn open in relation to said securely fastened bottom side of said rectangular cover 20.

Furthermore, said hinge link line 22 allowing the cover 20 to turn open in relation to said securely fastened bottom side of said rectangular cover 20 may also be arranged by a thinner material of the cover along the line of said hinge link line 22. Furthermore, said rectangular cover 20 may be designed such that the mere secure fastening of said rectangular cover 20 to the inclined roof element 5 by said secure fastening elements 21 naturally creates said hinge link line 22 when the pressure difference between the inside and the outside of enclosure for electrical equipment exceeds regular service conditions, thereby allowing the cover 20 to turn open in relation to said securely fastened bottom side of said rectangular cover 20.

Said rectangular cover 20 is semi-securely fastened from its top side to the inclined roof element 5 with a semi-secure fastening arrangement 31. Said semi-secure fastening arrangement 31 may comprise one or more semi-secure fastening elements 31. Said semi-secure fastening elements 31 may comprise rivets 31, semi-secure screws 31 or other semi-secure secure fastening elements 31.

Semi-secure secure fastening element(s) 31 secure said rectangular cover 20 so that in case of vandalism for an intention to penetrate the substation by forcing the opening of the cover 20, semi-secure fastening element(s) 31 prevent entering said enclosure for electrical equipment e.g., a substation. Furthermore, ingress protection is ensured during normal operation in such a way that water and foreign objects are prevented from penetrating said enclosure for electrical equipment.

When referring to "semi-secure fastening arrangement", to "semi-secure fastening elements" and to "semi-secure fastening of the top side of the rectangular cover to the inclined roof element", in this application it is meant to comprise any fastening elements and any fastening arrangements where the semi-secure fastening is arranged to secure the cover as "closed" during regular service conditions i.e. to withstand even heavy wind loads and where the semi-secure fastening is arranged to allow the cover to "open" when the pressure difference between the inside and the outside of enclosure for electrical equipment according to the present invention exceeds 0.5 ATM, i.e. when regular service conditions are exceeded.

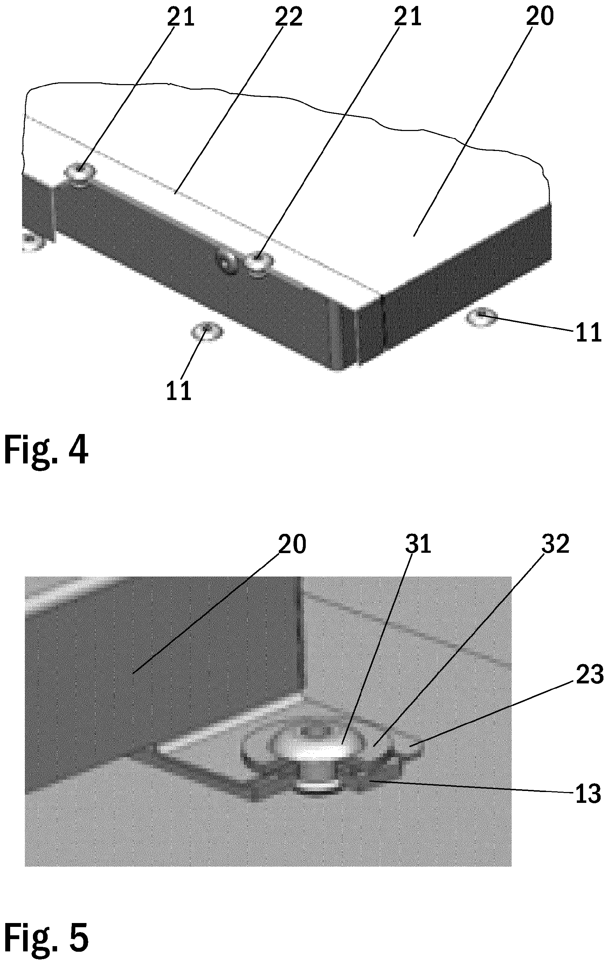

Figure 4 illustrates a partially cutaway perspective view of a bottom part of an embodiment of a cover of an inclined roof element of an enclosure for electrical equipment according to the present invention. In the presented embodiment a rectangular cover is numbered with a reference number 20. Secure fastening elements arranged to securely fasten the collar parts to the inclined roof element are numbered with a reference number 11.

In the presented embodiment said rectangular cover 20 is fastened from its bottom side to a bottom collar part 12 of the inclined roof element 5 with a secure fastening arrangement 21. Said secure fastening arrangement 21 may comprise several secure fastening elements 21 to securely fasten said bottom side of said rectangular cover 20 to the bottom collar part 12 of the inclined roof element 5, said several secure fastening elements 21 arranged in line forming a hinge link line 22 so that when the pressure difference between the inside and the outside of enclosure for electrical equipment exceeds regular service conditions said hinge link line 22 allows the cover 20 to turn open in relation to said securely fastened bottom side of said rectangular cover 20. Said secure fastening elements 21 may be rivets 21, screws 21, bolts 21, welded joints 21 or other secure fastening elements 21.

Said rectangular cover 20 may be designed such that the mere secure fastening of said rectangular cover 20 to the inclined roof element 5 by said secure fastening elements 21 naturally creates said hinge link line 22.

Said rectangular cover 20 may be designed such that the mere secure fastening of said rectangular cover 20 to the inclined roof element 5 by said secure fastening elements 21 naturally creates said hinge link line 22 when the pressure difference between the inside and the outside of enclosure for electrical equipment exceeds regular service conditions, thereby allowing the cover 20 to turn open in relation to said securely fastened bottom side of said rectangular cover 20.

Furthermore, said hinge link line 22 allowing the cover 20 to turn open in relation to said securely fastened bottom side of said rectangular cover 20 may also be arranged by a thinner material of the cover along the line of said hinge link line 22. Furthermore, said rectangular cover 20 may be designed such that the mere secure fastening of said rectangular cover 20 to the inclined roof element 5 by said secure fastening elements 21 naturally creates said hinge link line 22 when the pressure difference between the inside and the outside of enclosure for electrical equipment exceeds regular service conditions, thereby allowing the cover 20 to turn open in relation to said securely fastened bottom side of said rectangular cover 20.

Figure 5 illustrates a partially cutaway perspective view of a top part of an embodiment of a cover of an inclined roof element of an enclosure for electrical equipment according to the present invention. In the presented embodiment a rectangular cover is numbered with a reference number 20. Said rectangular cover 20 comprises in its top corners fastening lugs 23.

The top side of said rectangular cover 20 is semi-securely fastened to the inclined roof element 5 with a semi-secure fastening arrangement 31. Said semi-secure fastening arrangement 13, 23, 31, 32 may comprise one or more semi-secure fastening elements 31. Said semi-secure fastening elements 31 may comprise rivets 31, semi-secure screws 31 fastening strips 13, fastening lugs 23, one or more washers 32 and/or other semi-secure secure fastening elements 31. In the presented embodiment said semi-secure fastening arrangement 13, 23, 31, 32 comprises fastening strips 13, fastening lugs 23, one or more washers 32 and rivets 31.

In the presented embodiment the semi-secure fastening of said fastening lugs 23 of the rectangular cover to the inclined roof element 5 is arranged with fastening said fastening lugs 23 with rivets 31 and one or more washers 32 to a fastening strip 13 arranged near the top collar part 12 of the inclined roof element 5, said fastening strip 13 in turn being fastened to the inclined roof element 5 or to the top collar part 12.

In the presented embodiment the combination of a fastening strip 13, a fastening lug 23, one or more washers 32 and a rivet 31 creates a mechanical locking for the semi-secure fastening solution in such a way that when an overpressure inside the substation acts on said rectangular cover 20, the cover 20 is allowed to turn open in relation to said securely fastened bottom side of said rectangular cover 20. Said created mechanical locking solution for the semi-secure fastening is robust and requires an overpressure inside the substation exceeding regular service conditions to operate said cover 20.

Semi-secure secure fastening elements 31 secure said rectangular cover 20 so that in case of vandalism for an intention to penetrate the substation by forcing the opening of said cover 20, semi-secure fastening elements 31 prevent entering said enclosure for electrical equipment e.g., a substation. Furthermore, ingress protection is ensured during normal operation in such a way that water and foreign objects are prevented from penetrating said enclosure for electrical equipment.

When referring to "semi-secure fastening arrangement", to "semi-secure fastening elements" and to "semi-secure fastening of the top side of the rectangular cover to the inclined roof element", in this application it is meant to comprise any fastening elements and any fastening arrangements where the semi-secure fastening is arranged to secure the cover as "closed" during regular service conditions i.e. to withstand even heavy wind loads and where the semi-secure fastening is arranged to allow the cover to "open" when the pressure difference between the inside and the outside of enclosure for electrical equipment according to the present invention exceeds 0.5 ATM, i.e. when regular service conditions are exceeded.

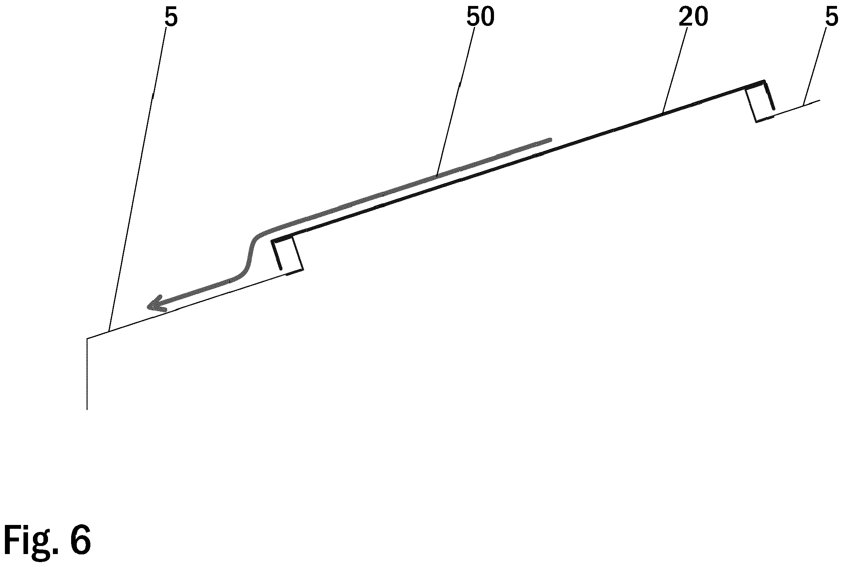

Figure 6 illustrates a side view of an embodiment of an inclined roof element of an enclosure for electrical equipment according to the present invention. In the presented embodiment said inclined roof element 5 comprises a rectangular opening together with a rectangular cover 20. In Figure 6 rainwater is represented with an arrow 50.

As seen from Figure 6, said rectangular cover 20 covers said rectangular opening of said inclined roof element 5 and prevents the rain and excess moisture from penetrating inside said enclosure for electrical equipment according to the present invention.

In the presented embodiment said design of said rectangular opening and said rectangular cover 20 avoids water ingress during normal operation. The rainwater 50 is guided via the channels on the side, not penetrating inside the enclosure for electrical equipment. In an embodiment, there is arranged a gasket sealing on the edge between said inclined roof element and said rectangular cover 20, the said gasket sealing preventing the rainwater to collect near the edges and from penetrating inside said enclosure for electrical equipment.

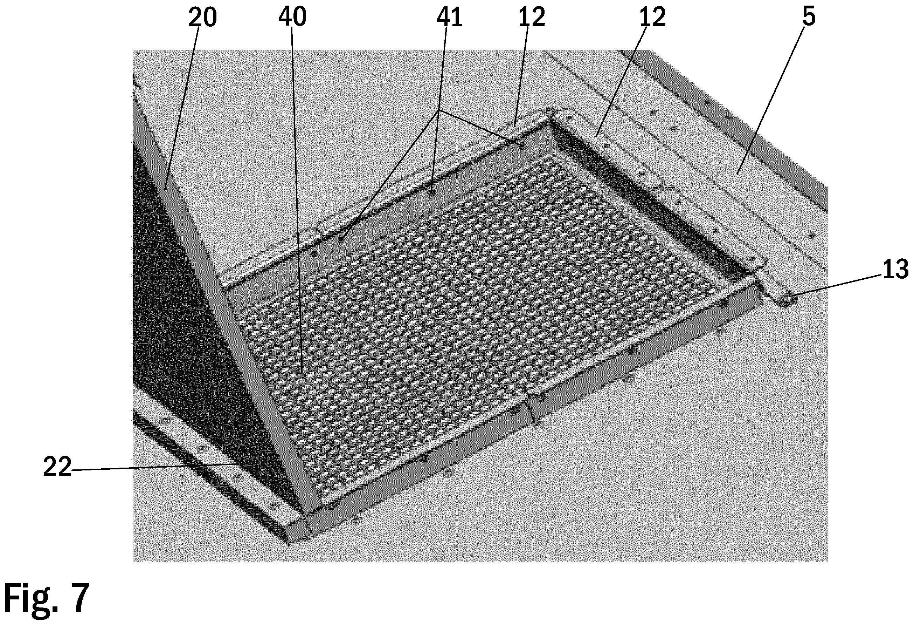

Figure 7 illustrates a partial perspective view of an embodiment of a rectangular opening with an opened cover of an inclined roof element of an enclosure for electrical equipment according to the present invention. An enclosure for electrical equipment may be an electrical substation for medium-voltage distribution networks. In the presented embodiment said inclined roof element 5 comprises a fastening strip 13 arranged near the top collar part 12 of said inclined roof element 5 and fastened to the inclined roof element 5 or to the top collar part 12.

As seen in Figure 7 said rectangular cover 20 comprises a hinge link line 22, which hinge link line 22 allows the cover 20 being turned open in relation to said securely fastened bottom side of said rectangular cover 20. Said hinge link line 22 allowing the cover 20 to turn open in relation to said securely fastened bottom side of said rectangular cover 20 may also be arranged by a thinner material of the cover along the line of said hinge link line 22. Furthermore, said rectangular cover 20 may be designed such that the mere secure fastening of said rectangular cover 20 to the bottom collar part 12 of the opening 10 of the inclined roof element 5 by said secure fastening elements 21 naturally creates said hinge link line 22 when the pressure difference between the inside and the outside of enclosure for electrical equipment exceeds regular service conditions, thereby allowing the cover 20 to turn open in relation to said securely fastened bottom side of said rectangular cover 20.

In the presented embodiment said rectangular opening comprises a mesh structure 40 assembled in said rectangular opening. Said mesh structure 40 may be secured to collar parts 12 of said rectangular opening with secure fastening elements 41.

Said secure fastening elements 41 are arranged to securely fasten said mesh structure 40 to said collar parts 12 of said inclined roof element 5. Said secure fastening elements 41 may be rivets 41, screws 41, bolts 41, welded joints 41 or other secure fastening elements 41.

In the presented embodiment said mesh structure 40 assembled in said rectangular opening avoids the penetration in the substation in case of vandalism. Furthermore, in the presented embodiment said mesh structure 40 is used as a heat exchanger arranged to cool down the hot gases.

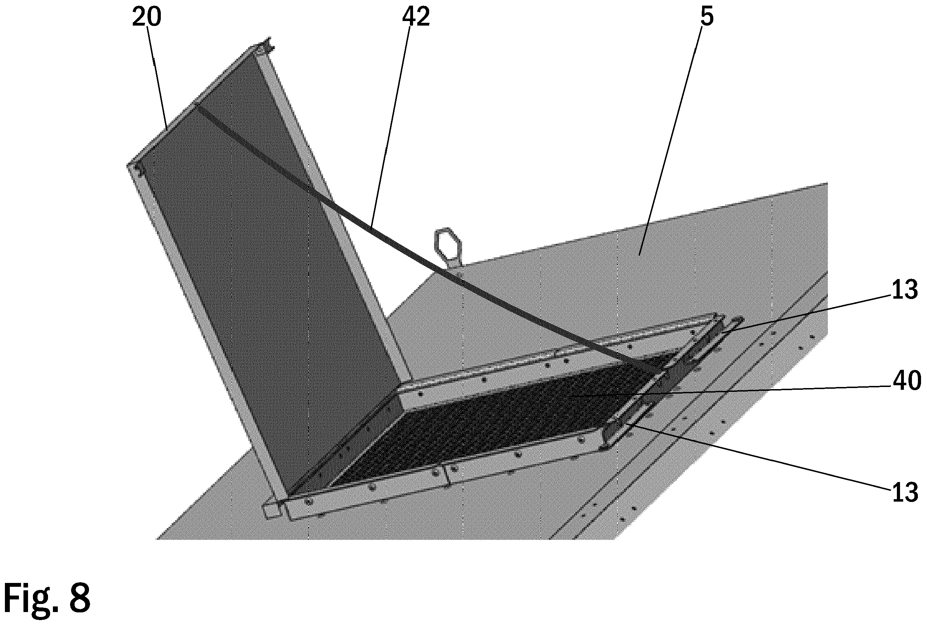

Figure 8 illustrates another partial perspective view of an embodiment of a rectangular opening with an opened cover of an inclined roof element of an enclosure for electrical equipment according to the present invention. An enclosure for electrical equipment may be an electrical substation for medium-voltage distribution networks. In the presented embodiment said inclined roof element 5 comprises a fastening strip 13 arranged near the top collar part 12 of said inclined roof element 5 and fastened to the inclined roof element 5 or to the top collar part 12. In the presented embodiment a mesh structure is numbered with a reference number 40.

In Figure 8 said rectangular cover 20 is turned open in relation to said securely fastened bottom side of said rectangular cover 20. In the presented embodiment said rectangular cover 20 comprises a limiting opening device 42. Said limiting opening device 42 is arranged to limit the opening of said rectangular cover 20 to the upright position or to a position ± 15 degrees from the upright position. Said limiting opening device 42 may be a cord 42, a cable 42, a string 42, a chain 42, a lever 42 or another limiting opening device 42.

In the presented embodiment said limiting opening device 42 limits the opening of said rectangular cover 20 when hit by the pressure wave during opening of said cover 20. When pressure acts over said cover 20, the forces are big and the said cover 20 might open in excess, provoking then hot gases not to go upwards. In addition, if the said cover 20 opens excessively, there is a risk of hitting persons in the vicinity of said electrical equipment enclosure. In the presented embodiment said limiting opening device 42 helps to avoid this.

As seen in Figure 8 said rectangular cover 20 also protects the persons in the vicinity of said electrical equipment from heat and flames of the hot burning gases.

With the help of the present invention, the problem of hot gases release and overpressure inside the enclosure for electrical equipment as well as structural withstand of said enclosure for electrical equipment is solved.

The present invention allows the at least one cover of said enclosure to open in the case of overpressure and not to be open in normal service conditions. Said opening of the at least one cover of said enclosure ensures that the overpressure does not cause damages to other parts of said enclosure such as doors, walls, etc.

With the help present invention said at least one cover of said enclosure prevents the rain and excess moisture from penetrating inside said enclosure for electrical equipment.

With the help present invention said at least one cover of said enclosure prevents the penetration or entering of the enclosure by forcing the opening of the cover of said enclosure for electrical equipment e.g., a substation. Furthermore, ingress protection is ensured during normal operation in such a way that water and foreign objects are prevented from penetrating said enclosure for electrical equipment.

The present invention provides a solution for a controlled opening cover in the roof of a substation to evacuate gases in the case of internal arc and also ensures a good degree of protection during normal operation.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. An enclosure (1) for electrical equipment, comprising a frame portion (3) and a roof portion (4) arranged on top of and covering said frame portion (3), said roof portion (4) comprising an at least one inclined roof element (5), wherein said at least one inclined roof element (5) comprises:
- an at least one rectangular opening (10) and respectively an at least one rectangular cover (20) arranged at the centre portion of said at least one inclined roof element (5), wherein
- said rectangular cover (20) is fastened from its bottom side to the inclined roof element (5) with a secure fastening arrangement (21), and
- said rectangular cover (20) is semi-securely fastened from its top side to the inclined roof element (5) with a semi-secure fastening arrangement (13, 23, 31, 32).

2. An enclosure (1) for electrical equipment according to claim 1, wherein said at least one inclined roof element (5) comprises collar parts (12) arranged in each side of said at least one rectangular opening (10).

3. An enclosure (1) for electrical equipment according to claim 1 or to claim 2, wherein said semi-secure fastening arrangement (13, 23, 31, 32) fastens said rectangular cover (20) from its top side to the inclined roof element (5) so that when an overpressure inside the substation acts on the cover, said rectangular cover (20), the cover (20) is allowed to turn open in relation to said securely fastened bottom side of said rectangular cover (20).

4. An enclosure (1) for electrical equipment according to any of the claims 1-3, wherein said secure fastening arrangement (21) comprises several secure fastening elements (21) arranged in line forming a hinge link line (22) so that when the pressure difference between the inside and the outside of enclosure for electrical equipment exceeds regular service conditions said hinge link line (22) allows said rectangular cover (20) to turn open in relation to said securely fastened bottom side of said rectangular cover (20).

5. An enclosure (1) for electrical equipment according to claim 4, wherein said rectangular cover (20) has thinner material of the cover along said hinge link line (22).

6. An enclosure (1) for electrical equipment according to any of the claims 1-5, wherein said an overpressure inside the substation is a pressure difference between the inside and the outside of enclosure for electrical equipment exceeding 0.5 ATM.

7. An enclosure (1) for electrical equipment according to any of the claims 1-6, wherein said enclosure (1) comprises two inclined roof elements (5).

8. An enclosure (1) for electrical equipment according to claim 7, wherein said two inclined roof elements (5) each comprise one rectangular opening (10) and respectively one rectangular cover (20).

9. An enclosure (1) for electrical equipment according to any of the claims 1-8, wherein said at least one said rectangular opening (10) comprises a mesh structure (40) assembled in said rectangular opening (10).

10. An enclosure (1) for electrical equipment according to claim 9, wherein said mesh structure (40) is securely fastened to collar parts (12) of said inclined roof element (5) avoiding the penetration in said enclosure (1).

11. An enclosure (1) for electrical equipment according to claim 9 or to claim 10, wherein said mesh structure (40) is used as a heat exchanger arranged to cool down hot gases.

12. An enclosure (1) for electrical equipment according to any of the claims 1-11, wherein said rectangular cover (20) comprises a limiting opening device (42) arranged to limit the opening of said rectangular cover (20) to the upright position.

13. An enclosure (1) for electrical equipment according to any of the claims 1-11, wherein said rectangular cover (20) comprises a limiting opening device (42) arranged to limit the opening of said rectangular cover (20) to a position ± 15 degrees from the upright position.

14. An enclosure (1) for electrical equipment according claim 12 or to claim 13, wherein said limiting opening device (42) is a cord (42), a cable (42), a string (42), a chain (42) or a lever (42).

15. An enclosure (1) for electrical equipment according to any of the claims 1-14, wherein said an at least one rectangular opening (10) and respectively an at least one rectangular cover (20) arranged at the centre portion of said at least one inclined roof element (5).
